# EUROPEAN PATENT SPECIFICATION

(11) **EP 0 906 794 B1**
(45) Date of publication and mention of the grant of the patent: **03.12.2003**
(21) Application number: 98307381.8
(22) Date of filing: 11.09.1998
(51) Int. Cl.: B07C 5/12, B07C 5/36

(54) **Long products sorting system**
Sortieranlage für lange Produkte
Système de tri de produits longs

(30) Priority: 16.09.1997 SG 9703427
(43) Date of publication of application: 07.04.1999
(73) Proprietor: Natsteel Technology Investments PTE Ltd, Singapore 628048 (SG)
(72) Inventor: Eng, Poh Tzan, Singapore 128185 (SG); Yong, Soo Kyun Joseph, Singapore 429074 (SG)
(74) Representative: Harrison Goddard Foote

(56) References cited:
- AT-B- 358 836
- GB-A- 2 170 187
- US-A- 3 085 686
- US-A- 3 656 617
- PATENT ABSTRACTS OF JAPAN vol. 097, no. 010, 31 October 1997 & JP 09 155298 A (TOYO KANETSU KK), 17 June 1997

## Description

The present invention relates to a long-product sorting system. In particular, the present invention pertains to a system for sorting in-between-length and remnant long-products efficiently and automatically.

Such systems are known, for instance , from AT 358836, GB 2 170 187 or US 3 085 686.

It is well known in long product rolling mills and downstream fabrication of bars that odd-length long products are generated. Traditionally, such long products are either recycled to the melt shop as scrap or sorted manually and grouped according to length. The recycling process is inefficient while the manual sorting process is time consuming and labor intensive.

It is an aim of the present invention to sort odd length bars and long products automatically to the closest predetermined stock length.

It is another aim of the present invention to reduce the labor input in long product sorting operation.

It is yet another aim of the present invention to modularize long product sorting system whose length resolution of sorted long products is adjustable.

According to one aspect of the present invention, there is provided a long product sorting system as described in claim 1.

According to another aspect of the invention, there is provided a method of sorting long products as described in claim 16.

### BRIEF DESCRIPTION OF THE DRAWINGS

FIG. 1 is the top plan elevational view of an embodiment of the present invention.

FIGS. 2A and B are front and right side views respectively of the measuring table of the long product sorting system embodying the present invention.

FIGS. 3A and 3B are front elevational views of the conveyor assembly of the long product sorting system.

FIG. 3C is the right side, cross sectional view of the stopper and kicker assemblies of the conveyor assembly according to section A - A in FIG. 3B

FIG 4A is a front elevational view of the extended conveyor assembly of the long product sorting system embodying the present invention.

FIG. 4B is the right side, cross sectional view of the stopper and kicker assembly according to section B - B of the extended conveyor assembly.

FIG. 5A is a top plan view of the bin embodying the present invention.

FIG. 58 is an enlarged view of one frame of a bins section.

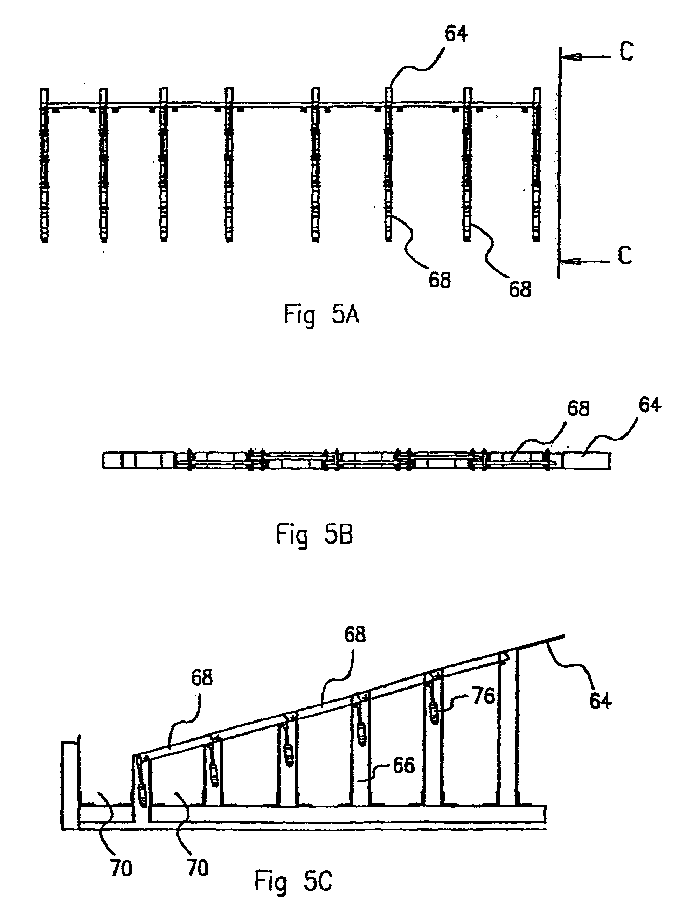

FIG. 5C is the right cross-sectional view of the bins section embodying the present invention according to section C - C in FIG. 5A.

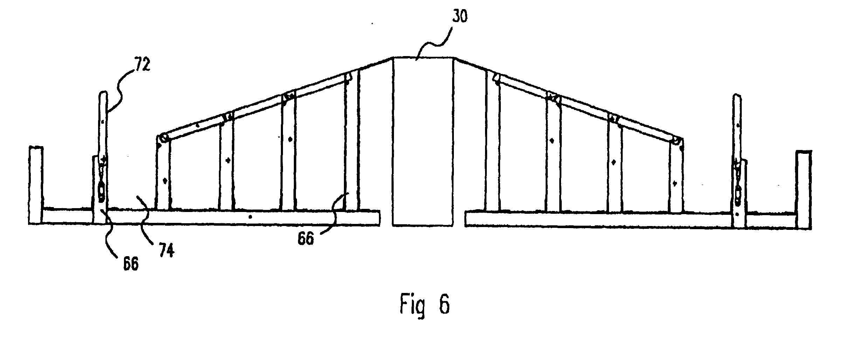

FIG. 6 is the right side plan view of the dual bins of the extended conveyor assembly embodying the present invention.

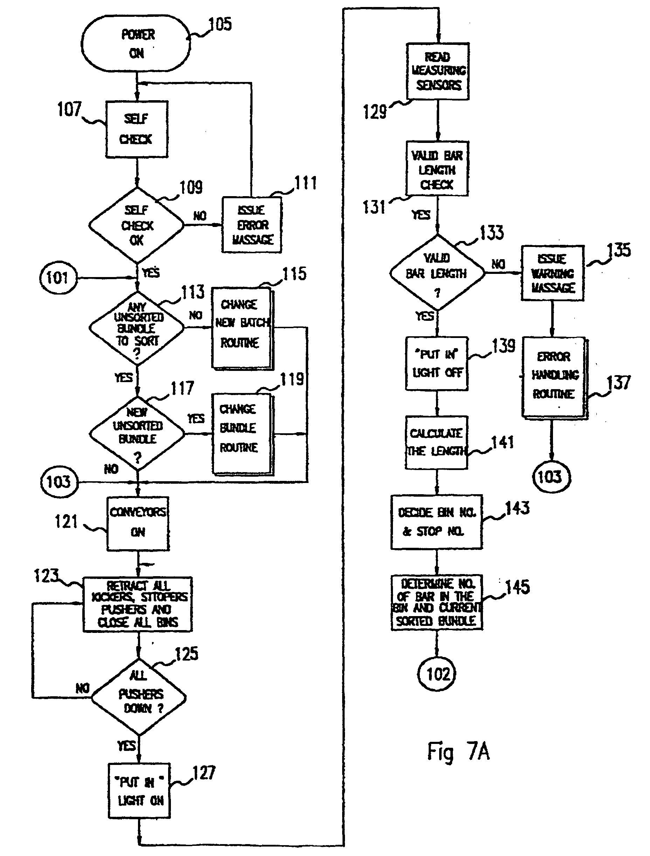

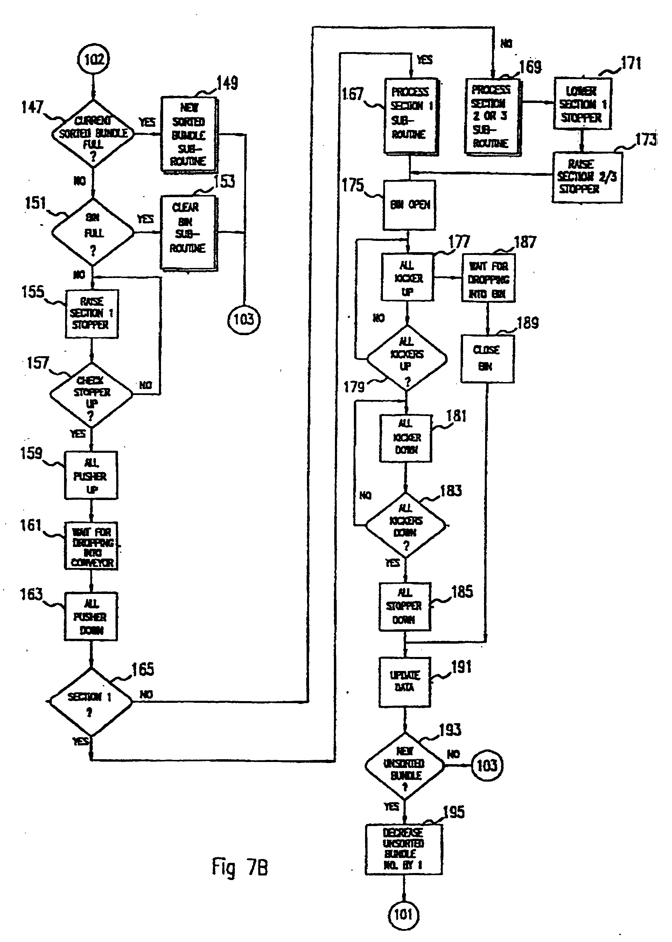

FIGS 7A and 7B are flowcharts illustrating the logic of a controller for the long product sorting system embodying the present invention.

Embodiments of the present invention provide a method and apparatus for sorting long products of varying lengths automatically. The system features various functional modules. The first module functions to measure the length of the product to be sorted. One embodiment of this module includes a sorting table having a sorting area and a measuring unit. The second module functions to transfer the measured product to the proximity of the correct storage bin. One embodiment of this second module is a conveyor system. The third module includes a group of storage bins disposed in parallel to the conveyor, the bins in each group having descending heights to utilize gravity as the moving force for the product to roll or slide down along the bin covers. A retractable bin cover or lever can be raised to allow the bin to receive the product. The system may be automated using a computer algorithm.

In the following description, numerous specific details are set forth such as mechanical parts and computer program steps, etc. in order to provide a thorough understanding of the present invention. It will be obvious to one skilled in the art that embodiments of the present invention maybe practiced without these specific details. In other instances, well-known parts such as those involved with the physical connection between the measuring sensors and the controller are not shown in order not to obscure the description of the embodiments of the present invention.

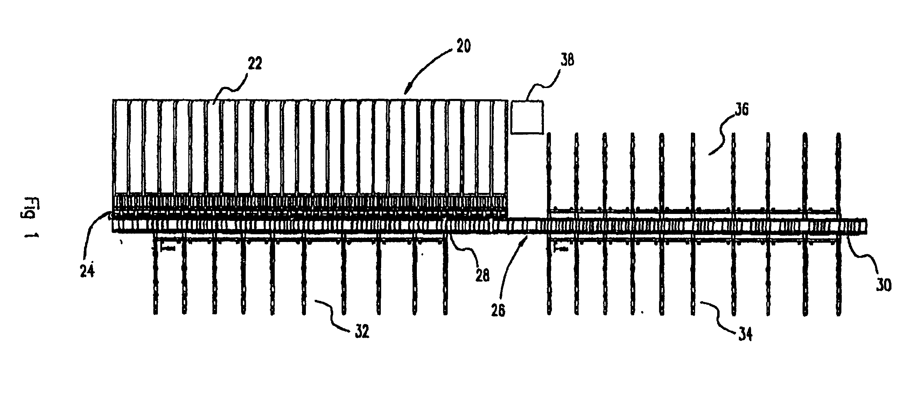

One embodiment of the present invention is shown in Figure 1. In this example, the system includes a sorting table **20** having a sorting area **22** and a measuring unit **24,** a conveyor system **26** having a primary conveyor section **28** and secondary conveyor section **30,** three groups of bins in sections 1, 2 and 3 (reference numerals **32, 34** and **36**) respectively, and a control and display panel with a personal computer **38.** Another embodiment would consist of only the primary conveyor section if a small number of bins are used. Other embodiments are envisioned whereby additional conveyor sections and groups of bins may be added to accommodate more types of long products of different lengths. In the embodiment given in Figure 1, the sorting area is a table. Other structures or an open area can also be used to retain the product for convenient sorting.

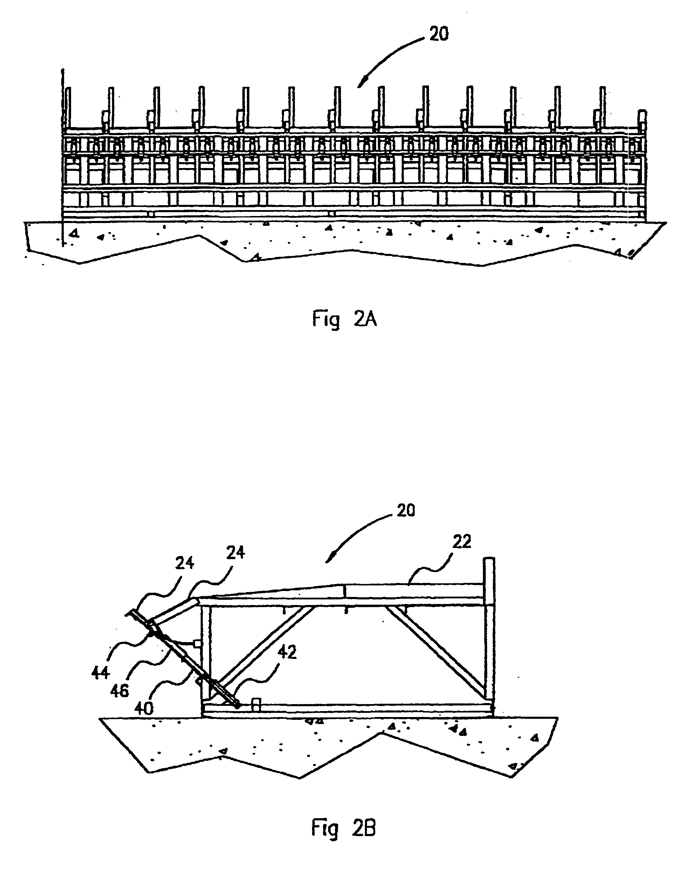

Referring to Figures 2A and B, the sorting table **20** includes a series of measuring sensors **44** mounted on the measuring unit **24** for sensing the length of the objects put on the surface of the sorting area **22.** A set of mechanical pushers **40** are provided to transfer the measured product onto the conveyor system. In this example, the pushers **40** are located adjacent to the sensors **44** and mechanically operated with a pneumatic cylinder **42**, and a guide **46.** In the preferred embodiment, an inductance proximity sensor is used. However, it is possible to use other sensors, or even contact-type limit switches to practice embodiments of the present invention. The pushers may also be operated by hydraulic or electrical means. In addition, modifications within the knowledge of one of ordinary skill in the art may be made to use optical or image processing methods for measurement.

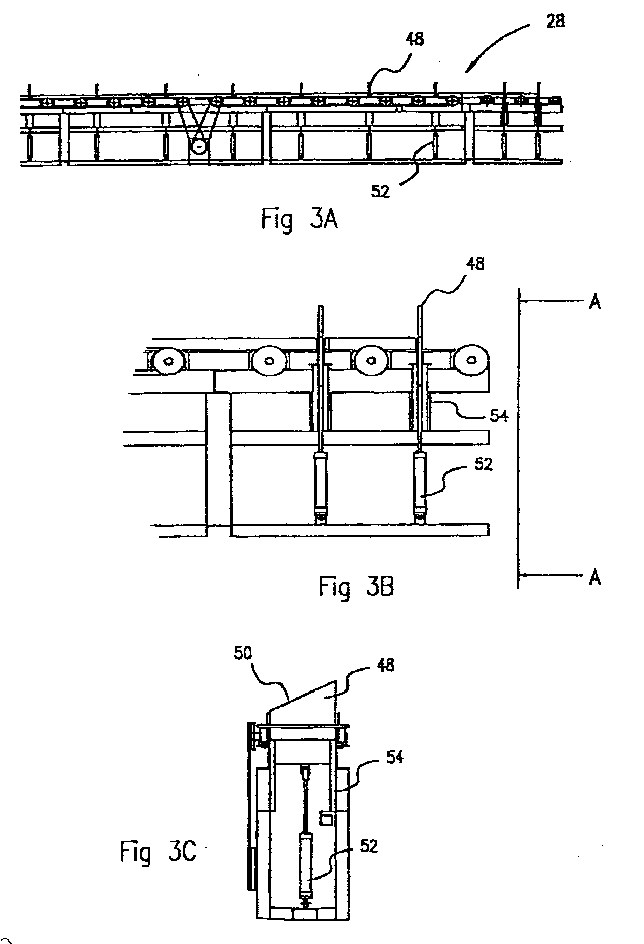

Figures 3A to C show an example of the primary conveyor section **28** adjacent to the section 1 primary group of bins. The conveyor includes a stopper plate and a series of kicker plates. The stoppers or kickers are plates which are provided perpendicular to the conveying direction of the conveyor system. The stopper plate aligns a product in the correct position along the conveying direction before it is "kicked" into the bin. It also functions as a gate to prevent the product in the primary conveyor from entering the secondary conveyor if the latter has a product already deposited there. The stopper/kicker plates **48** are trapezoidal in shape, and have their upper surfaces **50** sloping downwards towards the primary bins section. In the example shown in Figures 3B and C, each stopper and kicker assembly is provided with a pneumatic cylinder **52,** kicker plate **48** and guide support **54** and conventional means for the mechanical extension of the plate. When the stopper plate is in its retracted positions, a product that is transferred to the conveyor system would travel unimpeded along the conveyor. When the stopper plate is switched to a projected position before the product arrives, then it acts as a stopper to prevent the product from moving further down the conveyor system. Then to direct the product into a suitable bin, the kicker plates located directly below that product would be switched to a projected position. As the upper surface of each plate is downward sloping, the product would be "kicked" off the conveyor system onto section 1 containing a group of bins. Figures 3A shows all the plates in the extended position.

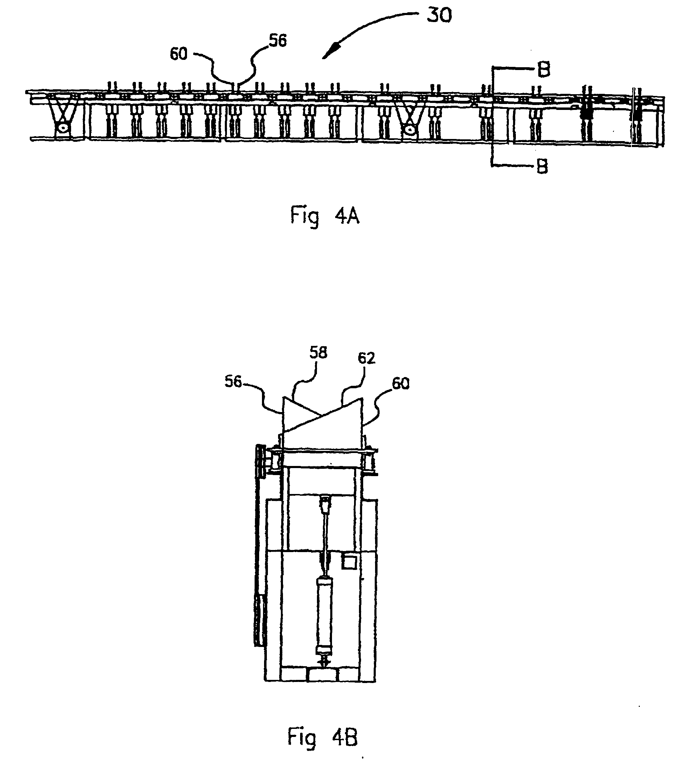

Figure 4A shows a segment of the secondary conveyor section **30**. In this example, the secondary conveyor section as discussed above acts as a extended conveyor and is situated between the sections 2 and 3 bins sections. In order for the kicker assemblies to function bidirectionally, i.e. kicking the product either to bins section 2 on one side or bins section 3 on the other side, two sets of kicker/stoppers are required in this secondary conveyor section. One type have plates **56** with the upper surface **58** sloping downwards in one direction, and another type with plates **60** with the upper surface **62** sloping downwards in the other direction. In this embodiment, any of the plates may function as a stopper. Once the product has been stopped at the appropriate position, the correct set of kickers are raised to "kick" the product to the correct bins section.

The bins sections according to one embodiment of the present invention comprises a plurality of elongated bins aligned in parallel with the conveyor. The bins are arranged in descending heights starting from the edge of the conveyor. The cover of each bin maintains a sloped configuration when closed whereby gravity causes the long product to roll or slide down the closed lever cover. The lever cover of the correct bin is switched to an open position and those of the wrong bins to a closed position before the product is pushed off the conveyor, such that the product would roll over the closed bins until it drops into the open bin.

Figure 5A to C shows the preferred embodiment of a bins section in accordance with the present invention. In this example, a sliding plate **64** serves as a platform from where a product "kicked" from the conveyor would roll past. It allows the products to roll down from the conveyor effectively. A plurality of elongated support pillars **66** are provided adjacent to the support beam. The support pillars are aligned to support a structure of levers **68**. The bins **70** are spaces provided between the support pillars. These bins have descending heights starting from the sliding plate. The levers can be switched to an open position, where upon products may be dropped into the bin below. Referring to Figure 6, lever **72** is in the open position, resulting in the product being dropped into bin **74**, when the product is "kicked" off to the left of the conveyor by appropriate kickers. The levers are operated with pneumatic cylinders **76** and actuators by conventional mechanical means.

Figures 7A and B shows a computer method for the automation of the equipment and method described above. The switches for the control of the various equipment are connected to a control and display station. When the power of the control unit is switched on **105,** the system to go through a self-check process **107.** The first step of the operation is the input from the operator as to whether there is any remaining bundle In the current batch or a new batch is to be started **113.** If there is no unsorted bundle in the current batch, i.e. the current batch has been completely sorted, a Change New Batch Routine **115** is performed to allow the entry of all the necessary batch and product information required by the system. If there are still bundles remaining in the current batch, the operator is prompted for whether current infeed unsorted bundle is completed **117.** If there are still products in the current bundle, the operation proceeds to step **121.** However, if the current infeed unsorted bundle is completed, the Change Bundle Routine **119** is performed. All necessary bundle information are input to the system. When all information has been entered, the operation proceeds to step **121.** The conveyor system will be switched on at step **121.** All kickers, stoppers and pushers will be retracted to the home position **123.** All bin covers are also activated to the closed position. The system control **125** checks to ensure all pushers are down before switching on the "PUT IN" light **127** to signal to the operator that the system is ready for him to throw in a new product. In the next step **129,** the system checks the signal feedback by measurements made by the measuring sensors to determine the presence or absence of a product, and to check **131** if the product length is a valid length **133.** If the length is valid, implying that there is a suitable product in the measuring unit, the "PUT IN" light is turned off **139,** signaling to the operator not to throw any new product into the measuring unit. However, if the system detects an invalid length, a warning is issued **135,** and the control loops back **103** to step **121.**

As the operation proceeds, the length of the product is calculated **141.** Depending on the detected length, the correct section, sorting bin and stopper to be activated are identified in step **143.** The number of product in the identified bin and the current sorted bundle are determined in step **145.** If the current sorted bundle in this bin is full **147,** a New Sorted Bundle Subroutine is performed. This subroutine temporarily stops the system such that the operator can physically bundle up the complete bundle. If the current bin is full **151,** a Clear Bin Subroutine is performed. This subroutine stops the machine and allows clearing of any bundle in all bins. If both current sorted bundle and bin are not full, Section 1 stopper will be raised in step **155** to confine the product to section 1. The system confirms in step **157** that the stopper is up before raising the pushers in step **159,** which causes the product to be pushed into the conveyor.

After some time delay **161,** all pushers are retracted in step **163.** Depending on the section the product is supposed to go, the sequence deviates after step **165.** If the correct section is section 2 or section 3, section 1 stopper will be retracted in step **171** to allow for the product to pass through. The correct stopper within section 2 or 3 will also be raised **173** to stop and position the product which would be traveling down the secondary conveyor after being released by the lowered section 1 stopper. Step **175** sends a signal to the correct bin cover for the lever to open. All kickers are then raised in step **177** to push the product out of the conveyor where it rolls or slides down into the designated bin. After some time delay **187** to allow the product time to drop into the bin, the bin cover is closed **189**. At the same time, the system ensure that the kickers are fully raised and subsequently fully retracted using steps **177-185.**

At this point, the product is sorted, and the system updates the production data **191.** If the current infeed unsorted bundle is completed and a new bundle is to be sorted **193,** the system will update **195** the production data by decreasing the number of unsorted bundle by one and the program loops **101** to step **113.** If the current infeed unsorted bundle is not complete, the operation loops back **103** to step **121** and prompts the operator to throw in a new product.

Although each support pillar have been described in the above examples as being designated for product for one length, it is possible that each channel may be subdivided to store products of different lengths. This is accomplished by using stopper plates at different positions to confine a product to a particular segment or frame within a bin.

While the present invention has been described particularly with references to Figures 1 to 7, with emphasis on a system for sorting long products automatically, it should be understood that the figures are for illustration only and should not be taken as limitation on the invention. In a addition, it is clear that the method and apparatus for the present invention has utility in many applications where automatic long product sorting is required. It is contemplated that many changes and modifications may be made by one of ordinary skill in the art without departing from the scope of the invention as defined in the appended claims.

## Claims

1. A long product sorting system comprising:
at least one measuring unit (24) having measuring means for ascertaining the length of each said long product and transferring means for transferring onwards the measured long product; and
at least one receiving section proximate said measuring unit (24) and adapted for receiving measured long products transferred by said transferring means therefrom, said receiving section having a plurality of receiving means (70) for receiving thereacross measured long products of similar length, each said receiving means (70) provided with covering means (68) having an open and a close position, said covering means (68) in their closed position adapted to form a sloped top surface across said receiving section such that said measured long products received from said measuring unit (24) can gravitate laterally from the top of one receiving means (70) to the top of the next receiving means (70) along said sloped surface, said covering means (68) further adapted to move to an open position to allow a designated receiving means (70) to receive measured long products,
whereby said long products are sorted into designated receiving means (70) to the nearest standard length automatically.

2. The long product sorting system in claim 1 wherein a conveyor (26) is provided between said measuring unit (24) and said receiving section, said conveyor (26) adapted to receive long products from said measuring unit (24) and to transfer long products to said receiving section therealong.

3. The long product sorting system in claim 2 wherein the conveyor (26) is aligned longitudinally between said measuring unit (24) and the top edge of said sloped surface of said receiving area, said conveyor (26) comprising
stopping means disposed along the length of said conveyor (26) for stopping the forward movement of said measured long product along the conveyor (26); and
unloading means disposed along the length of said conveyor (26) for unloading the measured long product laterally from said conveyor (26) onto said receiving section.

4. The long product sorting system in claim 2 further comprising at least one secondary conveyor (30) proximate at least one secondary receiving section, said secondary conveyor (30) adapted to transferring said long product from said conveyor (26) to at least one secondary receiving section, each secondary receiving section having a plurality of secondary receiving means with covering means, said covering means of said plurality of secondary receiving means joining to form a sloped top surface of said secondary receiving section.

5. The long product sorting system in claim 4 wherein the secondary conveyor (30) is aligned longitudinally with the top edge of said sloped surface of said secondary receiving section, said secondary conveyor (30) further aligned axially with said conveyor (26), said secondary conveyor (30) further comprising
stopping means disposed along the length of said secondary conveyor (30) for stopping the forward movement of said measured long product theralong,
unloading means disposed along the length of said secondary conveyor (30) for unloading the measured long product laterally from said conveyor (26) onto said receiving section.
whereby long products may be transferred from said measuring unit (24) to said secondary receiving section via the conveyor (26) and the secondary conveyor (30).

6. The long product sorting system according to any one of the preceding claims wherein said plurality of receiving means are elongated in shape with the longitudinal sides aligned in parallel, said aligned receiving means further having descending heights with one longitudinal side of the tallest receiving means disposed adjacent to said measuring unit (24) whereby a measured long product being transferred out of said measuring unit (24) by said transferring means will gravitate laterally along said receiving section.

7. The long product sorting system according to any one of the preceding claims wherein the covering means is a lever (68) assembly.

8. The long product sorting system according to any one of the preceding claims wherein said measuring means is at least one array of measuring sensor s (44).

9. The long product sorting system according to any one of the preceding claims wherein said transferring means is an array of pushers.

10. The long product sorting system in claim 8 wherein said measuring sensor (44) are spaced at a predetermined distance from each other, said predetermined distance corresponding to the tolerance of said long product sorting system.

11. The long product sorting system in claim 8 or 10 wherein said measuring sensor (44) comprises an inductance proximity sensor.

12. The long product sorting system in claim 9 wherein said pusher comprises a trapezoidal plate actuated with at least one pneumatic cylinder (42) for transferring said measured long products laterally to said receiving section.

13. The long product sorting system in claim 7 wherein said lever (68) assembly comprises a lever hinged on supporting means, said lever further actuated by a pneumatic cylinder (42).

14. The long product sorting system in any one of the above claims wherein a measuring table is provided along one side of said measuring unit (24), said measuring table adapted for urging said long products to gravitate towards the side of said measuring unit (24).

15. The long product sorting system in any one of the above claims wherein a controller is provided, said controller having at least one input means adapted to receive measurement information, and at least one output means adapted to transmit information.

16. A method of sorting long products using a long product sorting system, said system including a measuring unit (24) having sensing means and transferring means, and at least one receiving section having a plurality of receiving means (70) with covering means (68) adapted to move to an open position to allow a designated receiving means (70) to receive measured long products, said covering means (68) forming in their closed position a sloped top surface across said receiving section said method comprising the steps:
measuring length of said long product using said measuring means;
designating a receiving means (70) for receiving said long product;
opening said covering means (68) of said designated receiving means;
transferring said long product to said designated receiving means (70) by said transferring means such that said long product is transferred laterally from said measuring unit (24) to said receiving section and travels laterally therealong into said designated receiving means (70),
whereby said long products are sorted to the nearest standard lengths automatically.

17. The method of claim 16 wherein said method further comprises the step of moving a long product to said measuring unit (24) before said step of measuring length of said long product using said measuring means.

18. The method of claim 16 wherein said system further comprises a conveyor (26) having stopping means and unloading means.

19. The method of claim 18 wherein said method further comprises the step of designating a stopping means for stopping said long product along said conveyor (26) after said step of measuring length of said long product using said measuring means.

20. The method of claim 18 wherein said method further comprising the steps:
raising said designated stopping means in said conveyor (26) for stopping said long product at a designated position;
transferring said long product to said conveyor (26) using said transferring means; and
stopping said long product at the designated position along said conveyor (26) by said stopping means before said step of
transferring said long product to a designated receiving means by raising said unloading means such that said long product is unloaded laterally from said conveyor (26) to said receiving section and travels laterally therealong into the designated receiving means.

## Patentansprüche

1. Sortiersystem für lange Produkte, mit:
mindestens einem Meßsystem (24) mit einem Meßmittel zum Ermitteln der Länge jedes der langen Produkte und einem Beförderungsmittel zum Vorwärtsbefördern des gemessenen langen Produktes; und
mindestens einem dem Meßsystem (24) folgender Aufnahmeabschnitt, der zur Aufnahme der gemessenen langen Produkte ausgebildet ist, die durch das Beförderungsmittel hiervon befördert werden, wobei der Aufnahmeabschnitt eine Vielzahl von Aufnahmemitteln (70) zur Aufnahme gemessener langer Produkte von ähnlicher Länge aufweist, wobei jedes Aufnahmemittel (70) mit einem Abdeckmittel (68) ausgestattet ist, das eine offene und eine geschlossene Position aufweist, wobei das Abdeckmittel (68) in dessen geschlossener Position angepaßt ist, um eine schräg abfallende obere Oberfläche entlang dem Aufnahmeabschnitt zu bilden, so daß die gemessenen langen Produkte, die von dem Meßsystem (24) aufgenommen werden, lateral von dem Oberseite von einem Aufnahmemittel (70) zu der Oberseite des nächsten Aufnahmemittels (70) entlang der schräg abfallenden Oberfläche gravitieren können, wobei das Abdeckmittel (68) des weiteren angepaßt ist, um sich in eine geöffnete Position zu bewegen, um einem bestimmtem Aufnahmemittel (70) zu ermöglichen, gemessene lange Produkte aufzunehmen,
wobei die langen Produkte in bestimmte Aufnahmemittel (70) nach der nächsten Standardlänge automatisch sortiert werden.

2. Sortiersystem für lange Produkte nach Anspruch 1, wobei ein Fördermittel (26) zwischen dem Meßsystem (24) und dem Aufnahmeabschnitt zur Verfügung gestellt wird, wobei das Fördermittel (26) angepaßt ist, um lange Produkte von dem Meßsystem (24) aufzunehmen und lange Produkte zu dem Aufnahmeabschnitt entlang dessen zu befördern.

3. Sortiersystem für lange Produkte nach Anspruch 2, wobei das Fördermittel (26) longitudinal zwischen dem Meßsystem (24) und der oberen Kante der schräg abfallenden Oberfläche des Aufnahmebereichs ausgerichtet ist, wobei das Fördermittel (26) umfaßt
Haltemittel, die entlang der Länge des Fördermittels (26) zum Stoppen der Vorwärtsbewegung des gemessenen langen Produktes entlang dem Fördermittel (26) angeordnet sind; und
Entlademittel, die entlang der Länge des Fördermittels (26) angeordnet sind, um das gemessene lange Produkt lateral von dem Fördermittel (26) auf den Aufnahmeabschnitt zu entladen.

4. Sortiersystem für lange Produkte nach Anspruch 2 des weiteren umfassend mindestens ein zweites Fördermittel (30), das mindestens einem zweiten Aufnahmeabschnitt folgt, wobei das zweite Fördermittel (30) angepaßt ist, um das lange Produkt von dem Fördermittel (26) zu mindestens einem zweiten Aufnahmeabschnitt zu befördern, wobei der zweite Aufnahmeabschnitt eine Vielzahl von zweiten Aufnahmemitteln mit Abdeckmitteln aufweist, wobei die Abdeckmittel der Vielzahl der zweiten Aufnahmemittel sich verbinden, um eine schräg abfallende obere Oberfläche des zweiten Aufnahmeabschnitts zu bilden.

5. Sortiersystem für lange Produkte nach Anspruch 4, wobei das zweite Fördermittel (30) longitudinal mit der oberen Kante der schräg abfallenden Oberfläche des zweiten Aufnahmeabschnittes ausgerichtet ist, wobei das zweite Fördermittel (30) des weiteren axial mit dem Fördermittel (26) ausgerichtet ist, wobei das zweite Fördermittel (30) des weiteren umfaßt
Haltemittel, die entlang der Länge des zweiten Fördermittels (30) angeordnet sind, um die Vorwärtsbewegung des gemessenen langen Produktes entlang dessen zu stoppen,
Entlademittel, die entlang der Länge des zweiten Fördermittels (30) angeordnet sind, um das gemessene lange Produkt lateral von dem Fördermittel (26) auf den Aufnahmeabschnitt zu entladen,
wobei die langen Produkte von dem Meßsystem (24) zu dem zweiten Aufnahmeabschnitt über das Fördermittel (26) und das zweite Fördermittel (30) transportiert werden können.

6. Sortiersystem für lange Produkte nach einem der vorhergehenden Ansprüche, wobei die Vielzahl der Aufnahmemittel verlängert sind in Form mit den longitudinalen Seiten parallel ausgerichtet, wobei die ausgerichteten Aufnahmemittel des weiteren absteigende Höhen mit einer longitudinalen Seite des größten Aufnahmemittels aufweisen, die angrenzend an dem Meßsystem (24) angeordnet sind, wobei ein gemessenes langes Produkt, das von dem Meßsystem (24) heraus durch das Beförderungsmittel transportiert wird, lateral entlang dem Aufnahmeabschnitt gravitieren wird.

7. Sortiersystem für lange Produkte nach einem der vorhergehenden Ansprüche, wobei das Abdeckmittel eine Hebelanordnung (68) ist.

8. Sortiersystem für lange Produkte nach einem der vorhergehenden Ansprüche, wobei das Meßmittel mindestens ein Feld von Meßsensoren (44) ist.

9. Sortiersystem für lange Produkte nach einem der vorhergehenden Ansprüche, wobei das Beförderungsmittel ein Feld von Schubvorrichtungen ist.

10. Sortiersystem für lange Produkte nach Anspruch 8, wobei die Meßsensoren (44) mit einer vorbestimmten Entfernung voneinander angeordnet sind, wobei die vorbestimmte Entfernung der Toleranz des Sortiersystems für lange Produkte entspricht.

11. Sortiersystem für lange Produkte nach Anspruch 8 oder 10, wobei der Meßsensor (44) einen induktiven Abstandsmelder umfaßt.

12. Sortiersystem für lange Produkte nach Anspruch 9, wobei die Schubvorrichtung eine trapezförmige Platte umfaßt, die mit mindestens einem pneumatischen Zylinder (42) betätigt wird, um die gemessenen langen Produkte lateral zu dem Aufnahmeabschnitt zu befördern.

13. Sortiersystem für lange Produkte nach Anspruch 7, wobei die Hebelanordnung (68) einen Hebel umfaßt, der an Tragmitteln angelenkt ist, wobei der Hebel des weiteren durch einen pneumatischen Zylinder (42) betätigt wird.

14. Sortiersystem für lange Produkte nach einem der vorhergehenden Ansprüche, wobei ein Meßtisch entlang einer Seite des Meßsystems (24) bereitgestellt wird, wobei der Meßtisch zum Drängen angepaßt ist, so daß die langen Produkte zu der Seite des Meßsystems (24) gravitieren.

15. Sortiersystem für lange Produkte nach einem der vorhergehenden Ansprüche, wobei eine Regeleinrichtung bereitgestellt wird, die mindestens ein Eingangsmittel, das ausgebildet ist, um Meßinformationen zu erhalten, und mindestens ein Ausgangsmittel aufweist, das ausgebildet ist, um Informationen zu übermitteln.

16. Verfahren zum Sortieren von langen Produkten unter Verwendung eines Sortiersystems für lange Produkte, wobei das System ein Meßsystem (24) mit Tastmitteln und Beförderungsmitteln und mindestens einem Aufnahmeabschnitt mit einer Vielzahl von Aufnahmemitteln (70) mit Abdeckmitteln (68) enthält, die ausgebildet sind, sich in eine geöffnete Position zu bewegen, um einem bestimmten Aufnahmemittel zu ermöglichen, gemessene lange Produkte aufzunehmen, wobei die Abdeckmittel (68) in deren geschlossenen Position eine schräg abfallende obere Oberfläche entlang dem Aufnahmeabschnitt bilden, wobei das Verfahren die Schritte umfaßt:
Messen der Länge des langen Produktes unter Verwendung der Meßmittel;
Bestimmen eines Aufnahmemittels (70) zur Aufnahme des langen Produktes;
Öffnen des Abdeckmittels (68) des bestimmten Aufnahmemittels;
Befördern des langen Produktes zu dem bestimmten Aufnahmemittel (79) durch die Beförderungsmittel, so daß das lange Produkt lateral von dem Meßsystem (24) zu dem Aufnahmeabschnitt befördert wird und lateral dort entlang in das bestimmte Aufnahmemittel (70) sich bewegt,
wobei die langen Produkte nach der nächsten Standardlänge automatisch sortiert werden.

17. Verfahren nach Anspruch 16, wobei das Verfahren des weiteren den Schritt des Bewegens eines langen Produktes zu dem Meßsystem (24) vor dem Schritt des Messens der Länge des langen Produktes unter Verwendung der Meßmittel umfaßt.

18. Verfahren nach Anspruch 16, wobei das System weiterhin ein Fördermittel (26) mit Haltemitteln und Entlademitteln umfaßt.

19. Verfahren nach Anspruch 18, wobei das Verfahren weiterhin den Schritt des Bestimmens eines Haltemittels zum Stoppen des langen Produktes entlang dem Fördermittel (26) nach dem Schritt des Messens der Länge des langen Produktes unter Verwendung der Meßmittel umfaßt.

20. Verfahren nach Anspruch 18, wobei das Verfahren weiterhin die Schritte umfaßt:
Aufbauen des bestimmten Haltemittels in dem Fördermittel (26) zum Stoppen des langen Produktes an einer bestimmten Position;
Befördern des langen Produktes zu dem Fördermittel (26) unter Verwendung der Beförderungsmittel; und
Stoppen des langen Produktes an der bestimmten Position entlang dem Fördermittel (26) durch das Haltemittel vor dem Schritt des
Beförderns des langen Produktes zu einem bestimmten Aufnahmemittel durch Aufbringen von Entlademitteln, so daß das lange Produkt lateral von dem Fördermittel (26) zu dem Aufnahmeabschnitt entladen wird und sich lateral dort entlang in das bestimmte Aufnahmemittel bewegt.

## Revendications

1. Dispositif de tri de produits allongés comprenant :
au moins une unité de mesure (24) présentant des moyens de mesure pour s'assurer de la longueur de chacun desdits produits allongés, et des moyens de transfert pour transférer vers l'avant ledit produit allongé mesuré ; et
au moins une section de réception, à proximité de ladite unité de mesure (24) et apte à recevoir les produits allongés mesurés transférés par lesdits moyens de transfert depuis ceux-ci, ladite section de réception présentant une pluralité de moyens de réception (70) pour recevoir au travers de celle-ci les produits allongés mesurés de longueur similaire, chacun desdits moyens de réception (70) étant pourvus de moyens de couverture (68) présentant une position fermée et une position ouverte, lesdits moyens de couverture (68) dans leur position fermée étant adaptés à former une surface supérieure en pente au travers de ladite section de réception de façon que lesdits produits allongés mesurés, reçus de ladite unité de mesure (24) puissent graviter de manière latérale à partir du sommet de l'un des moyens de réception (70), vers le sommet du moyen de réception suivant (70) le long de ladite surface en pente, lesdits moyens de couverture (68) étant en outre aptes à se déplacer vers une position ouverte pour permettre à un moyen de réception (70) désigné, de recevoir les produits allongés mesurés,
**caractérisé en ce que** lesdits produits allongés sont triés dans des moyens (70) de réception désignés, automatiquement à la longueur standard la plus proche.

2. Dispositif de tri de produits allongés selon la revendication 1, **caractérisé en ce qu'**un convoyeur (26) est pourvu entre ladite unité de mesure (24) et ladite section de réception, ledit convoyeur (26) étant apte à recevoir lesdits produits allongés à partir de ladite unité de mesure (24) et apte à transférer les produits allongés vers la section de réception le long de celle-ci.

3. Dispositif de tri de produits allongés selon la revendication 2, **caractérisé en ce que** le convoyeur (26) est aligné longitudinalement entre ladite unité de mesure (24) et le bord de ladite surface en pente de ladite surface de réception, ledit convoyeur (26) comprenant :
- des moyens d'arrêt disposés le long de la longueur dudit convoyeur (26) pour stopper le mouvement en avant dudit produit allongé mesuré le long du convoyeur (26) ; et
- des moyens de déchargement disposés le long de la longueur dudit convoyeur (26) pour décharger le produit allongé mesuré latéralement dudit convoyeur (26) sur ladite section de réception.

4. Système de tri de produits allongés selon la revendication 2, **caractérisé en ce qu'**il comporte en outre au moins un convoyeur secondaire (30) proche d'au moins une section de réception secondaire, ledit convoyeur secondaire (30) étant apte à transférer ledit produit allongé dudit convoyeur (26) vers au moins une section de réception secondaire, chaque section de réception secondaire présentant une pluralité de moyens de réception secondaire avec des moyens de couverture, lesdits moyens de couverture de ladite pluralité de moyens de réception secondaire étant joints pour former une surface supérieure en pente de ladite section de réception secondaire.

5. Système de tri de produits allongés selon la revendication 4, **caractérisé en ce que** le convoyeur secondaire (30) est aligné longitudinalement avec le bord supérieur de ladite surface en pente de ladite section de réception secondaire, ledit convoyeur secondaire (30) étant de plus aligné axialement avec ledit convoyeur (26), ledit convoyeur secondaire (30) comprenant en outre :
- des moyens d'arrêt disposés le long de la longueur dudit convoyeur secondaire (30) pour arrêter le mouvement vers l'avant dudit produit allongé mesuré le long ; et
- des moyens de déchargement disposés le long de la longueur dudit convoyeur secondaire (30) pour décharger le produit allongé mesuré latéralement dudit convoyeur (26) sur ladite section de réception ;
- **caractérisé en ce que** lesdits produits allongés peuvent être transférés depuis ladite unité de mesure (24) vers ladite section de réception secondaire, via le convoyeur (26), et le convoyeur (30) secondaire.

6. Système de tri de produits allongés selon l'une des revendications précédentes, **caractérisé en ce que** ladite pluralité des moyens de réception sont de forme allongée avec les côtés longitudinaux alignés en parallèle, lesdits moyens de réception alignés ayant en outre des hauteurs descendantes avec un côté longitudinal du moyen de réception le plus grand, disposés adjacents à ladite unité de mesure (24), et **en ce qu'**un produit allongé mesuré est transféré hors de ladite unité de mesure (24) par lesdits moyens de transfert en gravitant latéralement le long de ladite section de réception.

7. Dispositif de tri de produits allongés selon l'une des revendications précédentes, **caractérisé en ce que** les moyens de couverture sont constitués d'un assemblage de levier (68).

8. Dispositif de tri de produits allongés selon l'une des revendications précédentes, **caractérisé en ce que** lesdits moyens de mesure sont au moins une matrice de capteur de mesure (44).

9. Dispositif de tri de produits allongés selon l'une des revendications précédentes, **caractérisé en ce que** lesdits moyens de transfert sont constitués d'une matrice de pousseurs.

10. Dispositif de tri de produits allongés selon la revendication 8, **caractérisé en ce que** lesdits capteurs de mesure (44) sont espacés d'une distance prédéterminée les uns des autres, ladite distance prédéterminée correspondant à la tolérance dudit dispositif de tri de produits allongés.

11. Dispositif de tri de produits allongés selon l'une des revendications 8 ou 10, **caractérisé en ce que** ledit capteur de mesure (44) comporte un capteur de proximité d'inductance.

12. Dispositif de tri de produits allongés selon la revendication 9, **caractérisé en ce que** ledit pousseur comporte une plaque trapézoïdale actionnée par au moins un cylindre (42) pneumatique pour transférer lesdits produits allongés mesurés latéralement vers ladite section de réception.

13. Dispositif de tri de produits allongés selon la revendication 7, **caractérisé en ce que** ledit assemblage de levier (68) comporte un levier articulé sur des moyens supports, ledit levier étant en outre actionné par un cylindre (42) pneumatique.

14. Dispositif de tri de produits allongés selon l'une des revendications précédentes, **caractérisé en ce qu'**une table de mesure est fournie le long d'un côté de ladite unité de mesure (24), ladite table de mesure étant apte à faire en sorte que lesdits produits allongés gravitent vers le côté de ladite unité de mesure (24).

15. Dispositif de tri de produits allongés selon l'une des revendications précédentes, **caractérisé en ce qu'**un contrôleur est prévu, ce dernier présentant au moins des moyens d'entrée aptes à recevoir une information de mesure, et au moins un moyen de sortie apte à transmettre l'information.

16. Procédé de tri de produits allongés utilisant un dispositif de tri de produits allongés, ledit dispositif incluant une unité de mesure (24) présentant des moyens capteurs et des moyens de transferts et au moins une section de réception présentant une pluralité de moyens de réception (70) avec des moyens de couverture (68) aptes à se déplacer vers une position ouverte pour permettre à des moyens de réception désignés de recevoir par les produits longs mesurés, lesdits moyens de couverture (68) formant dans leur position fermée une surface supérieure en pente au travers de ladite section de réception, ledit procédé comprenant les étapes de :
mesurer la longueur dudit produit allongé en utilisant lesdits moyens de mesure ;
- désigner un moyen de réception (70) pour recevoir ledit produit allongé ;
- ouvrir lesdits moyens de couverture desdits moyens de réception désignés ;
- transférer ledit produit allongé vers ledit moyen de réception désigné (70) par lesdits moyens de transfert de façon que ledit produit allongé soit transféré latéralement depuis ladite unité de mesure (24) vers ladite section de réception et voyage latéralement le long de celle-ci dans ledit moyen de réception désigné (70),
- **caractérisé en ce que** lesdits produits allongés sont triés automatiquement aux longueurs standards les plus proches.

17. Procédé selon la revendication 16, **caractérisé en ce qu'**il comporte en outre l'étape de déplacer un produit allongé vers l'unité de mesure (24) avant ladite étape de mesurer la longueur dudit produit allongé en utilisant lesdits moyens de mesure.

18. Procédé selon la revendication 16, **caractérisé en ce que** ledit dispositif comporte en outre un convoyeur (26) présentant des moyens d'arrêt et des moyens de déchargement.

19. Procédé selon la revendication 18, **caractérisé en ce qu'**il comporte en outre l'étape de désigner un moyen d'arrêt pour arrêter ledit produit allongé le long dudit convoyeur (26), après ladite étape de mesure de la longueur dudit produit allongé en utilisant lesdits moyens de mesure.

20. Procédé selon l'une des revendications précédentes, **caractérisé en ce qu'**il comporte en outre les étapes de :
- élever lesdits moyens d'arrêt désignés dans ledit convoyeur (26) pour stopper ledit produit allongé en une position désignée ;
- transférer ledit produit allongé vers ledit convoyeur (26) en utilisant lesdits moyens de transfert ; et
- arrêter ledit produit allongé dans la position désignée le long dudit convoyeur (26) par lesdits moyens d'arrêt avant ladite étape de transférer ledit produit allongé vers un moyen de réception désigné par lesdits moyens de déchargement de façon que ledit produit allongé soit déchargé latéralement depuis le convoyeur (26) vers ladite section de réception, et se déplace latéralement le long de celle-ci, dans les moyens de réception désignés.
